(19) Europäisches Patentamt
European Patent Office
Office européen des brevets

(11) **EP 1 278 958 B1**

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(51) Int Cl.:
*F03G 7/06* (2006.01)      *B32B 15/08* (2006.01)
*B32B 15/01* (2006.01)

(21) Anmeldenummer: **01943229.3**

(22) Anmeldetag: **06.04.2001**

(86) Internationale Anmeldenummer:
**PCT/EP2001/003953**

(87) Internationale Veröffentlichungsnummer:
**WO 2001/078978 (25.10.2001 Gazette 2001/43)**

(54) **BISTABILER FORMGEDÄCHTNIS-POLYMER-VERBUND**

BISTABLE SHAPE MEMORY POLYMER COMPOSITE

COMPOSITE COMPRENANT DU POLYMERE A MEMOIRE DE FORME BISTABLE

(84) Benannte Vertragsstaaten:
**AT BE CH CY DE DK ES FI FR GB GR IE IT LI LU MC NL PT SE TR**

(30) Priorität: **17.04.2000 DE 10019183**

(43) Veröffentlichungstag der Anmeldung:
**29.01.2003 Patentblatt 2003/05**

(73) Patentinhaber: **Stiftung Caesar Center of Advanced European Studies and Research 53111 Bonn (DE)**

(72) Erfinder:
• **WINZEK, Bernhard 53173 Bonn (DE)**

• **QUANDT, Eckhard 53177 Bonn (DE)**

(74) Vertreter: **Schrooten, Rolf Braun-Dullaeus Pannen Schrooten Haber, Mörsenbroicher Weg 200 40470 Düsseldorf (DE)**

(56) Entgegenhaltungen:
**EP-A- 0 761 188        EP-A- 0 839 506
EP-A- 0 928 604        US-A- 6 133 547**

• **DATABASE WPI Section Ch, Week 199403 Derwent Publications Ltd., London, GB; Class A32, AN 1994-022296 XP002179038 & JP 05 329847 A (TORAY IND INC), 14. Dezember 1993 (1993-12-14)**

**Beschreibung**

Die Erfindung betrifft einen Schichtverbund, umfassend einen Formgedächtnisverbund, wobei der Formgedächtnisverbund mindestens eine Formgedächtnisschicht aufweist, die auf einem Substrat aufgebracht ist, wobei die Formgedächtnisschicht in Abhängigkeit von der Temperatur in einer Martensitphase und/oder in einer Austenitphase vorliegt. Die Erfindung betrifft ferner ein Verfahren zum Verändern der Form eines derartigen Schichtverbundes sowie eine bevorzugte Verwendung.

Formgedächtniswerkstoffe zeichnen sich insbesondere dadurch aus, dass sie in einer Tieftemperaturphase (Martensit) in eine erste Form verformt werden können und dass sie sich nach einer Erwärmung und einer Verformung in einer Hochtemperaturphase (Austenit) und anschließender Abkühlung in der Tieftemperaturphase wieder an diese Formgebung erinnern und die erste Form wieder annehmen.

Formgedächtnislegierungen durchlaufen eine martensitische Transformation und ändern dabei ihre Kristallstruktur. Mit der Änderung der Struktur ändern sich beim Übergang von der Niedertemperaturphase Martensit zur Hochtemperaturphase Austenit auch die elastischen Eigenschaften des Materials.

Wird eine mechanische Bias-Spannung angelegt, so können bei diesem Übergang je nach Randbedingung große Spannungen $\Delta\sigma$ ausgeübt oder große Formänderungen $\Delta\varepsilon$ durchlaufen werden. Formgedächtnisverbunde, bei denen eine Formgedächtnisschicht auf einem Substrat abgeschieden ist, können auf diese Weise Aktorbewegungen insbesondere in kleinen Mikrosystemen ausführen. Die nötige Bias-Spannung wird durch die Spannung zwischen der Formgedächtnisschicht und dem Substrat gewährleistet, die entsteht, wenn die Formgedächtnisschicht bei hohen Temperaturen kristallisiert und anschließend abkühlt.

In Abhängigkeit von der Temperatur ändert sich die Spannung in der auf ein Substrat abgeschiedenen Formgedächtnisschicht, wodurch es zu einem Bimetalleffekt kommt. Hierbei ist mit den unterschiedlichen Spannungswerten eine Änderung der Krümmung des Formgedächtnisverbundes verbunden. Ist die Formgedächtnisschicht im Austenitzustand, so befindet sich der Formgedächtnisverbund in einem gekrümmten Zustand. Liegt die Formgedächtnisschicht dagegen im Martensitzustand vor, so befindet sich der Formgedächtnisverbund in einem nahezu planaren Zustand, da durch die Bildung orientierter Martensitvarianten die Schichtverbundspannung auf einen relativ niedrigen Wert reduziert wird.

Ein derartiger Formgedächtnisverbund mit einer in Abhängigkeit von der Temperatur erfolgenden Formänderung kann insbesondere in der Mikrosystemtechnik als Aktor verwendet werden, um elektrische oder thermische Energie in mechanische Arbeit umzuwandeln. Neben dem zur Verfügung stehenden Arbeitsvermögen spielt für die Auswahl des geeigneten Mechanismus die erforderliche Energiezufuhr eine entscheidende Rolle.

Mikrosysteme sollen mit einer möglichst geringen Energiezufuhr auskommen, um mit entsprechend klein dimensionierten Energiequellen auskommen zu können. Aktoren, die thermisch aktiviert werden, beispielsweise Bimetalle oder die zuvor genannten Formgedächtnisaktoren, sind zwar bekannt für ihr großes Arbeitsvermögen, aber sie benötigen auch viel Energie um die mechanische Arbeit zu leisten.

Dieser hohe Energiebedarfs stellt einen erheblichen Nachteil dar, der insbesondere in der Mikrosystemtechnik den Einsatz derartiger Aktoren oftmals unmöglich macht.

Aufgabe der vorliegenden Erfindung ist daher einen konstruktiv einfachen, preiswert herzustellenden und leicht handhabbaren Schichtverbund der eingangs genannten Art zu schaffen, der mit möglichst geringem Energieverbrauch mechanische Arbeit leisten kann. Insbesondere soll er als Aktor für Mikrosysteme einen leichten und kleinbauenden Mechanismus bereitstellen, der das Umschalten zwischen verschiedenen Zuständen erlaubt, ohne dauerhaft Energie zuführen zu müssen. Ferner soll ein Verfahren bereitgestellt werden, mit dem ein derartiger Schichtverbund auf einfache Weise und mit geringem Energieeinsatz als Aktor mechanische Arbeit leisten kann.

Diese Aufgabe wird erfindungsgemäß durch einen Schichtverbund nach Anspruch 1 gelöst. Wesentlich ist dabei, dass der Schichtverbund zumindest eine Polymerschicht aus einem Polymer mit thermoplastischen Eigenschaften aufweist, wobei bei einer ersten Temperatur, bei der die Formgedächtnisschicht im Martensitzustand ist und bei der das Polymer in einem festen Zustand sich befindet, die Steifigkeit des Polymers größer ist als die Steifigkeit des Formgedächtnisverbundes, und wobei bei einer zweiten höheren Temperatur, bei der die Formgedächtnisschicht im Austenitzustand ist und bei der das Polymer gummiartige Eigenschaften aufweist, die Steifigkeit des Polymers kleiner ist als die Steifigkeit des Formgedächtnisverbundes und wobei ferner die bei der Erwärmung der Formgedächtnisschicht in die Austenitphase bzw. bei der Abkühlung der Formgedächtnisschicht in die Martensitphase auftretende Hystereseschleife bezüglich der Temperatur eine Breite hat, innerhalb derer der Übergang der Polymerschicht vom festen bzw. glasartigen Zustand in den gummiartigen Zustand liegt.

Hierdurch wird auf konstruktiv einfache Weise ein Mechanismus geschaffen, der mit sehr geringem Energieverbrauch mechanische Arbeit leisten kann. Der Hauptvorteil besteht dabei darin, dass ein bistabiles System geschaffen wird, bei dem lediglich zum Schalten Energie erforderlich ist, während zum Halten der geschalteten Zustände jedoch keine Energie aufgebracht werden muss. Der Mechanismus ist bei einfacher Konstruktion preiswert herzustellen und kann mit sehr geringem Gewicht und bei sehr geringem Platzbedarf auch in Mikrosystemen vielfältig eingesetzt werden. Im Falle von thermisch aktivierten Aktoren hat ein derartiger Mechanismus zusätzlich den Vorteil, dass das Gehäuse und benachbarte Strukturen nicht durch eine zu hohe Wärmeausbreitung beeinflußt werden.

Als Polymer mit thermoplastischen Eigenschaften kommen dabei solche Polymere in Betracht, die zwischen einem festen Aggregatzustand und der Schmelze einen zusätzlichen gummiartigen bzw. viskoelastischen Zustand aufweisen, der dadurch gekennzeichnet ist, dass Querverbindungen benachbarter Polymerketten durch thermische Anregung gelöst werden. Unter zahlreichen Polymeren mit diesen Eigenschaften wird vorzugsweise die Verwendung von Polymethylmetacrylat (PMMA) vorgeschlagen. Der Übergang vom festen in den gummiartigen Zustand des Polymers wird begleitet von einer erheblichen Senkung des Elastizitätsmoduls um ca. 3 Größenordnungen. Dadurch sinkt auch die Steifigkeit eines Werkstücks aus diesem Polymer um den gleichen Faktor. Umgekehrt läßt sich der gedehnte Zustand eines gummiartigen Polymers durch Abkühlen in den festen Zustand einfrieren. Die anschließende Erwärmung bewirkt die Rückbildung der Dehnung, weswegen teilweise auch von einem "Formgedächtniseffekt" von Polymeren gesprochen wird. Die charakteristische Größe für den Übergang vom festen in den gummiartigen Zustand wird dabei durch die Glasübergangstemperatur beschrieben. Die Höhe dieser Glasübergangstemperatur läßt sich durch die Wahl des Polymers und die Breite des Übergangs durch die Verteilung der enthaltenen Polymerkettenlängen festlegen. Wesentlich ist, dass das Polymer bei Wärmezufuhr nicht wie Duroplaste oder Duromere unmittelbar in eine flüssige Phase der Schmelze übergeht, sondern dass zunächst eine Phase eines zähen gummiartigen Zustands erreicht wird.

Die den Hysteresebereich der Formgedächtnisschicht festlegenden Übergangstemperaturen können in weiten Bereichen eingestellt werden. So läßt sich beispielsweise bei einer Formgedächtnisschicht auf Basis einer Legierung aus Titan (Ti) und Nickel (Ni) durch die sukzessive Substitution von Nickel (Ni) durch Paladium (Pd) oder durch die Substitution von Titan (Ti) durch Hafnium (Hf) die Übergangstemperaturen der Formgedächtnisschichten auf Temperaturen von bis zu 500 °C erhöhen. Durch die Substitution von Nickel (Ni) durch Eisen (Fe) lassen sich die Übergangstemperaturen dagegen verringern. Auch die Hysteresebreite hängt von den beigefügten Substituenten ab, so dass sie ebenfalls durch geeignete Wahl der Formgedächtnislegierung eingestellt werden kann. Dabei erhöht eine Substitution von Nickel (Ni) durch Eisen (Fe) die Hysteresebreite, während die Substitution von Nickel (Ni) durch Kupfer (Cu) diese verringert.

Besonders vorteilhaft ist es, wenn die Polymerschicht thermischen Kontakt zu dem Formgedächtnisverbund hat. In alternativen Ausführungsformen kann die Polymerschicht auch mechanischen Kontakt zu dem Formgedächtnisverbund haben und mit diesem im gleichen Wärmebad sich befinden, so dass die Polymerschicht der gleichen Umgebungstemperatur ausgesetzt ist wie der Formgedächtnisverbund.

Für eine besonders einfache und kleinbauende Ausführungsform wird vorgeschlagen, dass die Polymerschicht auf einer parallel zu seinen Schichten verlaufenden Längsseite oder auf einer senkrecht zu seinen Schichten verlaufenden Querseite des Formgedächtnisverbundes vorgesehen ist.

Gemäß einer Ausführungsvariante wird vorgeschlagen, dass auf zwei einander gegenüberliegenden jeweils parallel oder senkrecht zu seinen Schichten verlaufenden Längsseiten bzw. Querseiten des Formgedächtnisverbundes jeweils eine Polymerschicht vorgesehen ist.

Eine besonders einfach herzustellende Ausführungsform wird dadurch erreicht, dass der Formgedächtnisverbund an den Längsseiten und an den Querseiten von einer durchgehenden Polymerschicht umgeben ist. Der Formgedächtnisverbund kann dabei sowohl einschließlich als auch ausschließlich seiner Stirnseiten vollständig von einem Polymer umschlossen sein.

In besonders bevorzugten Ausführungsformen besteht die Formgedächtnisschicht aus einer Legierung mit Titan (Ti) und Nickel (Ni). Weiterhin besteht in einer bevorzugten Ausführungsform das Substrat aus einem Metallstreifen, vorzugsweise vollständig oder überwiegend aus Molybdän (Mo) und oder Silizium (Si).

Besonders vorteilhaft ist es, wenn das Substrat einen thermischen Ausdehnungskoeffizienten hat, der sich von dem thermischen Ausdehnungskoeffizienten der Formgedächtnisschicht um mindestens $2*10^{-6}$ 1/K unterscheidet. Auf diese Weise können ausreichend große Formänderungen bzw. Auslenkungen des Schichtverbundes erreicht werden.

Gemäß dem erfindungsgemäßen Verfahren wird die Form eines Schichtverbundes der vorangehend beschriebenen Art dadurch verändert, dass der Schichtverbund kurzzeitig erwärmt wird. Danach kann er wieder auf Umgebungstemperatur abkühlen. Hierbei ist nur für den reinen Umschaltvorgang die Zufuhr von Wärme bzw. Energie erforderlich, während zum Halten der jeweils erreichten Formzustände keine weitere Energie zugeführt werden muss.

Zum Schalten des Aktors bzw. zum Verändern der Form eines Schichtverbundes von einer Ausgangsform in eine Endform wird erfindungsgemäß vorgeschlagen, dass der Schichtverbund bis auf eine Temperatur erwärmt wird, bei der die Formgedächtnisschicht von der Martensitphase vollständig in die Austenitphase übergeht. Hierbei ist jedoch zu beachten, dass die Polymerschicht dadurch nicht soweit erwärmt wird, dass sie mit der Umgebung chemisch reagiert, sich die Polymerkettenlängenverteilung deutlich verändert oder die Polymerschicht fließt.

Nachdem der Schichtverbund ohne weitere Energiezufuhr in der erreichten Endform gehalten werden kann, erfolgt eine Veränderung der Form von der Endform zurück in die Ausgangsform erfindungsgemäß dadurch, dass der Schichtverbund bis auf eine Temperatur erwärmt wird, bei der die Polymerschicht in einen Zustand übergeht, bei der sie gummiartige Eigenschaften aufweist und bei der die Formgedächtnisschicht noch in der Martensitphase vorliegt. Hierbei ist es wesentlich, dass die Temperatur nicht soweit erhöht wird, dass die Formgedächtnisschicht erneut von der Martensitphase in die Austenitphase übergeht.

Auf besonders einfache Weise kann die Erwärmung des Schichtverbundes durch die Zufuhr von elektrischem Strom herbeigeführt werden.

Auf diese Weise läßt sich ein erfindungsgemäßer Schichtverbund insbesondere auch in keinen Mikrosystemen als Aktor zur Umwandlung von thermischer und/oder elektrischer Energie in mechanische Arbeit einsetzen.

Weitere Vorteile und Merkmale der Erfindung ergeben sich aus der nachfolgenden Beschreibung und den in den Zeichnungen dargestellten Ausführungsbeispielen.

Es zeigen:

Figur 1: schematisches Spannung-Dehnung-Diagramm einer Formgedächtnislegierung

Figur 2: Spannung-Temperatur-Diagramm eines Formgedächtnisverbundes

Figur 3: Elastizitätsmodul-Temperatur-Diagramm eines Polymers mit thermoplastischen Eigenschaften

Figur 4a: Skizze zum Auslenken eines erfindungsgemäßen Schichtverbundes durch Erwärmung und anschließende Abkühlung

Figur 4b: Krümmungszustände des erfindungsgemäßen Schichtverbundes bei Erwärmung und Abkühlung gemäß Figur 4a

Figur 5a: Skizze zur Rückbildung der Auslenkung eines erfindungsgemäßen Schichtverbundes durch Erwärmung und anschließende Abkühlung

Figur 5b: Krümmungszustände des erfindungsgemäßen Schichtverbundes bei Erwärmung und Abkühlung gemäß Figur 5a

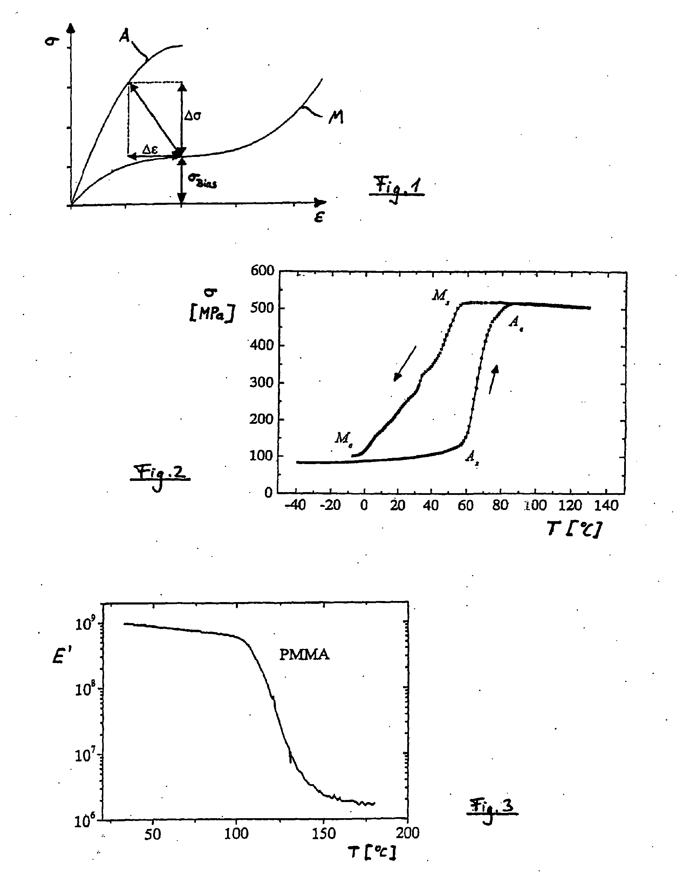

In Figur 1 ist schematisch dargestellt, wie sich beim Übergang von der Niedertemperaturphase Martensit M zur Hochtemperaturphase Austenit A die elastischen Eigenschaften einer Formgedächtnislegierung ändern. Hierbei ist die Spannung $\sigma$ über der Dehnung $\varepsilon$ aufgetragen. Als Formgedächtnislegierung für eine Formgedächtnisschicht F eines erfindungsgemäßen Schichtverbundes SV kann dabei insbesondere eine Titan-Nickel-Basis-Legierung verwendet werden, beispielsweise TiNi, Ti(Ni,Cu), Ti(Ni,Fe), Ti(Ni,Pd), Ti(Ni, Au), (Ti,Hf)Ni oder (Ti,Zr)Ni.

Figur 2 zeigt den Verlauf der Spannung $\sigma$ (in MPa) in Abhängigkeit von der Temperatur T (in °C) bei einer TiNi-Formgedächtnisschicht F, die auf ein Substrat S aus Molybdän abgeschieden wurde. Die aufgenommenen Werte ergeben sich bei einer 2 $\mu$m dicken $Ti_{52,2}Ni_{47,8}$-Schicht auf einem 50 $\mu$m dicken Mo-Substrat 2 nach einer einstündigen Glühung bei 700°C. Die angegebenen Übergangstemperaturen bezeichnen die Martensitstarttemperatur $M_s$, die Martensitendtemperatur $M_e$, die Austenitstarttemperatur $A_s$ und die Austenitendtemperatur $A_e$. Der lineare Anteil oberhalb von 80°C zeigt den Bimetallspannungsanteil und der nichtlineare Anteil zwischen 0°C und 80°C die Wirkung der Formgedächtnislegierung. Mit den unterschiedlichen Spannungswerten $\sigma$ ist zugleich eine Änderung der Krümmung des aus der Formgedächtnisschicht F und dem Substrat S bestehenden Formgedächtnisverbundes verbunden. Liegt die Formgedächtnisschicht F im Austenitzustand A vor, so befindet sich der Formgedächtnisverbund in einem gekrümmten Zustand. Liegt die Formgedächtnisschicht F dagegen im Martensitzustand vor, so befindet sich der Formgedächtnisverbund in einem nahezu planaren Zustand, da durch die Bildung orientierter Martensitvarianten die Schichtverbundspannung auf einen relativ niedrigen Wert von ca. 100 bis 200 MPa reduziert wird.

In Figur 3 ist der Verlauf des Elastizitätsmoduls E bzw. des Speichermoduls E' in Abhängigkeit von der Temperatur T (in °C) bei einem thermoplastische Eigenschaften aufweisenden Polymer P aus PMMA dargestellt. Der Speichermodul E' unterscheidet sich hierbei nur um einen konstanten Faktor vom Elastizitätsmodul E.

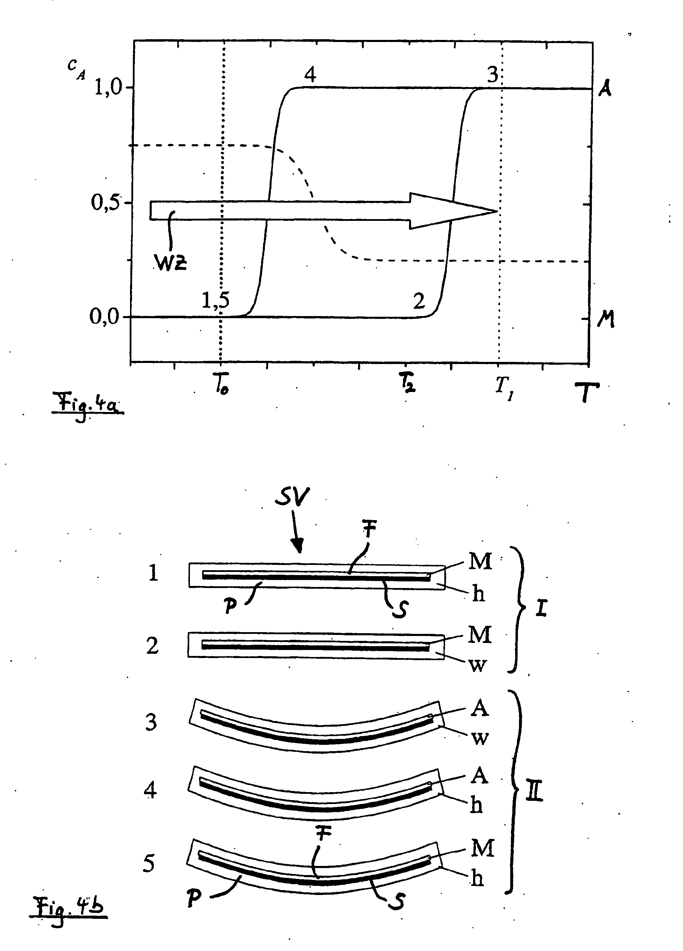

Das Verfahren zur Auslenkung des erfindungsgemäßen Schichtverbundes SV aus einer planaren Ausgangform I in eine gekrümmte Endform II ist in den Figuren 4a und 4b schematisch dargestellt. Das Verfahren erfolgt in fünf Teilschritten 1 bis 5, die in beiden Figuren übereinstimmend gekennzeichnet sind. Die durchgezogenen Linien stellen den Anteil $c_A$ an Austenit A in der Formgedächtnisschicht F dar, während die gestrichelte Linie die Elastizität der Polymerschicht P darstellt.

Im ersten Verfahrensschritt 1 befindet sich der erfindungsgemäße Schichtverbund SV, der aus einer vollständig von einer Polymerschicht P umgebenen Formgedächtnisverbund aus Formgedächtnisschicht F und Substrat S besteht, bei der Umgebungstemperatur $T_0$ in einem ebenen Zustand I. Die Formgedächtnisschicht F liegt dabei im Martensitzustand M und die Polymerschicht P liegt im harten Glaszustand h bei einer hohen Elastizität mit einem E-Modul von ca. 1,5 GPa vor.

Die Wärmezufuhr WZ zum gesamten Schichtverbundes SV bis zu einer Temperatur $T_2$ hat im zweiten Verfahrensschritt 2 zur Folge, dass die Polymerschicht P in den gummiartig weichen Zustand w mit einer niedrigen Elastizität übergeht. Die Formgedächtnisschicht F bleibt hierbei aber noch in der Marensitphase M.

Im dritten Verfahrensschritt 3 führt die weitere Erwärmung WZ bis zu einer Temperatur $T_1$ zur Trans-

formation der Formgedächtnisschicht F vom Martensitzustand M in den Austenitzustand A. Da der Austenitzustand A mit einer Krümmung des Formgedächtnisverbundes verbunden ist und die weiche Polymerschicht P dieser Krümmung keinen Widerstand entgegenstellen kann, kommt es zur Auslenkung des gesamten Schichtverbundes in die Endform II.

Nach Beendigung der Wärme- bzw. Energiezufuhr WZ kühlt der Schichtverbund SV im vierten Verfahrensschritt 4 anschließend ab. Dabei geht zunächst die Polymerschicht P wieder in den festen Glaszustand h über und friert damit den Auslenkungszustand II des gesamten Schichtverbundes SV ein.

Schließlich geht in dem fünften Verfahrensschritt 5 bei weiterer Abkühlung bis auf die Umgebungstemperatur $T_0$ auch die Formgedächtnisschicht F wieder in den Martensitzustand M als Ausgangszustand über. Wegen der starren Polymermatrix der Polymerschicht P bleibt jedoch der ausgelenkte Zustand II des gesamten Schichtverbundes SV erhalten.

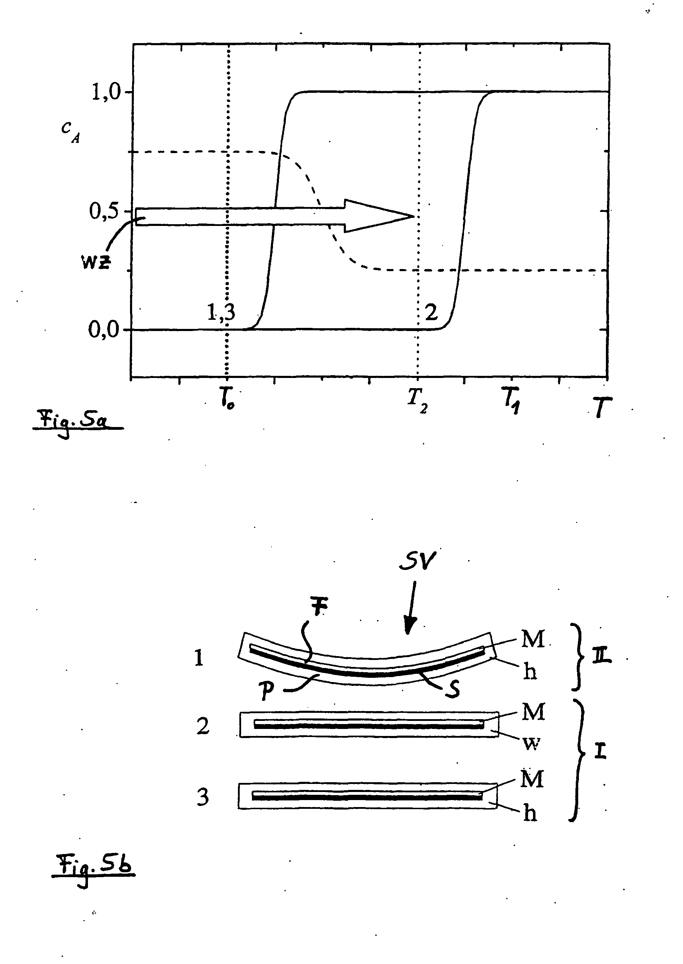

Das Verfahren zur Rückbildung der Auslenkung des Schichtverbundes SV aus der gekrümmten Endform II in die planare Ausgangform I ist in den Figuren 5a und 5b schematisch dargestellt. Dieses Verfahren erfolgt in drei Teilschritten 1' bis 3', die in beiden Figuren ebenfalls übereinstimmend gekennzeichnet sind. Auch hier stellen die durchgezogenen Linien den Anteil $c_A$ an Austenit A in der Formgedächtnisschicht F dar, während die gestrichelte Linie die Elastizität der Polymerschicht P darstellt.

Im ersten Verfahrensschritt 1' befindet sich der erfindungsgemäße Schichtverbund SV bei der Umgebungstemperatur $T_0$ in dem ausgelenkten Endzustand II. Die Formgedächtnisschicht F liegt dabei im Martensitzustand M und die Polymerschicht P liegt im harten Glaszustand h bei einer hohen Elastizität mit einem E-Modul von ca. 1,5 GPa vor.

Die Erwärmung WZ des gesamten Schichtverbundes SV bis zu einer Temperatur $T_2$ hat im zweiten Verfahrensschritt 2' zur Folge, dass die Polymerschicht P in den gummiartig weichen Zustand w mit niedriger Elastizität übergeht. Dadurch kann die zuvor in der glasartigen Polymermatrix eingefrorene martensitische Formgedächtnisschicht F zurück in den ebenen Zustand I übergehen.

In dem abschließenden dritten Verfahrensschritt 3' kühlt der gesamte Schichtverbund SV wieder bis auf die Umgebungstemperatur $T_0$ ab, wobei die Polymerschicht P wieder in den festen Glaszustand h erstarrt. Der ebene Zustand I des Schichtverbundes SV wird dadurch fixiert.

Sowohl in Figur 4a als auch in Figur 5a ist deutlich zu erkennen, dass die bei der Erwärmung WZ der Formgedächtnisschicht F in die Austenitphase A bzw. bei der anschließenden Abkühlung der Formgedächtnisschicht F in die Martensitphase M auftretende Hystereseschleife bezüglich der Temperatur T eine Breite hat, innerhalb derer der Übergang der Polymerschicht P vom festen bzw. glasartig harten Zustand h in den gummiartig weichen Zustand w liegt. Ebenfalls ist zu erkennen, dass die Temperatur $T_1$ erheblich oberhalb der Temperatur $T_2$ liegt.

Zur Beurteilung der bei der Formänderung des erfindungsgemäßen Schichtverbundes SV erzeugten Kräfte haben Untersuchungen von Formgedächtnisverbunden gezeigt, dass ein Verbund aus einer Ti(Ni, Cu)-Schicht F mit einer Dicke von 10 $\mu$m auf einem Mo-Substrat S mit einer Dicke von 25 $\mu$m oberhalb der Austenitendtemperatur $A_e$ einen Krümmungsradius $\rho$ von 10 mm aufweist.

Die Formgedächtnisschicht F erbringt dazu einen Drehmoment M von

$$M = \frac{E'_{Mo} b d_{Mo}^3}{12\rho} = 0,06 N \cdot b$$ mit dem effektiven E-Modul $E' = \frac{E}{1-\upsilon} = 459,4 GPa$ und der Substratdicke $d_{Mo}$ von Mo sowie der Verbundbreite b.

Zur Krümmung einer PMMA-Schicht P z.B. der Dicke 420 $\mu$m mit einem E-Modul von 1 GPa ist nach der gleichen Berechnung ein Drehmoment von *0,6N·b* erforderlich. Dieser Wert beträgt das zehnfache des Drehmoments vom Mo-Substrat S. Bei Raumtemperatur $T_0$ ist demnach die Steifigkeit der PMMA-Schicht P für das mechanische Verhalten des gesamten Schichtverbundes SV dominierend. Wird dagegen die PMMA-Schicht P soweit erwärmt, dass sie den gummiarten Bereich erreicht, so sinkt der E-Modul von PMMA um drei Größenordnungen. Das bedeutet, dass der Drehmoment des Formgedächtnisverbundes hundertmal größer als jener von PMMA ist und somit der Einfluß der PMMA-Schicht P auf das Aktorverhalten des gesamten Schichtverbundes SV vernachlässigt werden kann.

Der erfindungsgemäße Schichtverbund SV kann somit insbesondere in der Mikrosystemtechnik als kleiner und energiesparender Aktor zur Verrichtung mechanischer Arbeit eingesetzt werden. Er stellt ein bistabiles System dar, bei dem lediglich für den Schaltvorgang von einem Zustand zu einem anderen Zustand Energie zugeführt werden muss. Zum Halten der jeweiligen Zustände ist die Zufuhr weiterer Energie dagegen nicht erforderlich.

**Bezugszeichenliste**

SV    Schichtverbund
F     Formgedächtnisschicht
S     Substrat
P     Polymerschicht
M     Martensit
A     Austenit
$c_A$   Anteil an Austenit in F

| T | Temperatur |
|---|---|
| E | Elastizitätsmodul |
| E' | Speichermodul |
| σ | Spannung |
| ε | Dehnung |
| WZ | Erwärmung |
| I | Ausgangsform |
| II | Endform |
| h | harter Zustand von P |
| w | weicher Zustand von P |

**Patentansprüche**

1. Schichtverbund (SV), umfassend einen Formgedächtnisverbund, welcher mindestens eine Formgedächtnisschicht (F) aufweist, die auf einem Substrat (S) aufgebracht ist, wobei die Formgedächtnisschicht (F) in Abhängigkeit von der Temperatur (T) in einer Martensitphase (M) und/oder in einer Austenitphase (A) vorliegt, **dadurch gekennzeichnet,** **dass** der Schichtverbund (SV) zumindest eine Polymerschicht (P) aus einem Polymer mit thermoplastischen Eigenschaften aufweist, **dass** bei einer ersten Temperatur ($T_0$), bei der die Formgedächtnisschicht (F) im Martensitzustand (M) ist und bei der das Polymer (P) in einem festen Zustand (h) sich befindet, die Steifigkeit des Polymers (P) größer ist als die Steifigkeit des Formgedächtnisverbundes, **dass** bei einer zweiten höheren Temperatur ($T_1$), bei der die Formgedächtnisschicht (F) im Austenitzustand (A) ist und bei der das Polymer (P) gummiartige Eigenschaften (w) aufweist, die Steifigkeit des Polymers (P) kleiner ist als die Steifigkeit des Formgedächtnisverbundes, und dass die bei einer Erwärmung (WZ) der Formgedächtnisschicht (F) in die Austenitphase (A) bzw. bei einer Abkühlung der Formgedächtnisschicht (F) in die Martensitphase (M) auftretende Hystereseschleife bezüglich der Temperatur (T) eine Breite hat, innerhalb derer der Übergang der Polymerschicht (P) vom festen Zustand (h) in den gummiartigen Zustand (w) liegt, wobei der gummiartige Zustand (w) **dadurch gekennzeichnet ist, dass** Querverbindungen benachbarter Polymerketten durch thermische Anregung gelöst werden.

2. Schichtverbund nach Anspruch 1 , **dadurch gekennzeichnet , dass** die Polymerschicht (P) thermischen Kontakt zu dem Formgedächtnisverbund hat oder dass die Polymerschicht (P) mechanischen Kontakt zu dem Formgedächtnisverbund hat und mit diesem im gleichen Wärmebad sich befindet.

3. Schichtverbund nach Anspruch 1 oder 2, **dadurch gekennzeichnet, dass** die Polymerschicht (P) auf einer parallel oder senkrecht zu seinen Schichten (F,S) verlaufenden Längsseite bzw. Querseite des Formgedächtnisverbundes vorgesehen ist.

4. Schichtverbund nach einem der vorherigen Ansprüche, **dadurch gekennzeichnet, dass** auf zwei einander gegenüberliegenden, jeweils parallel oder senkrecht zu seinen Schichten (F, S) verlaufenden Längsseiten bzw. Querseiten des Formgedächtnisverbundes jeweils eine Polymerschicht (P) vorgesehen ist.

5. Schichtverbund nach Anspruch 4, **dadurch gekennzeichnet, dass** der Formgedächtnisverbund an den Längsseiten und an den Querseiten von einer durchgehenden Polymerschicht (P) umgeben ist.

6. Schichtverbund nach einem der vorherigen Ansprüche, **dadurch gekennzeichnet, dass** die Formgedächtnisschicht (F) eine Legierung mit Titan (Ti) und Nickel (Ni) ist.

7. Schichtverbund nach einem der vorherigen Ansprüche, **dadurch gekennzeichnet, dass** das Substrat (S) ein Metall, ein Halbmetall oder eine Keramik, vorzugsweise aus oder mit Molybdän (Mo), Silizium (Si), Siliziumdioxyd ($SiO_2$) oder Siliziumnitrid ($Si_3Ni_4$) ist.

8. Schichtverbund nach einem der vorherigen Ansprüche, **dadurch gekennzeichnet, dass** das Substrat (S) einen thermischen Ausdehnungskoeffizienten hat, der sich von dem thermischen Ausdehnungskoeffizienten der Formgedächtnisschicht (F) um mindestens $2*10^{-6}$ 1/K unterscheidet.

9. Schichtverbund nach einem der vorherigen Ansprüche, **dadurch gekennzeichnet, dass** er eine Dicke zwischen 1 $\mu$m und 20 mm, vorzugsweise zwischen 20 $\mu$m und 500 $\mu$m aufweist.

10. Verfahren zum Verändern der Form eines Schichtverbundes nach einem der vorherigen Ansprüche, **dadurch gekennzeichnet, dass** der Schichtverbund (SV) erwärmt wird.

11. Verfahren nach Anspruch 10 zum Verändern der Form eines Schichtverbundes von einer Ausgangsform (I) in eine Endform (II), **dadurch gekennzeichnet, dass** der Schichtverbund (SV) bis auf eine Temperatur ($T_1$) erwärmt wird, bei der die Formgedächtnisschicht (F) von der Martensitphase (M) vollständig in die Austenitphase (A) übergeht.

12. Verfahren nach Anspruch 10 oder 11 zum Verändern der Form eines Schichtverbundes von einer Endform (II) zurück in eine Ausgangsform (I), **dadurch gekennzeichnet, dass** der Schichtverbund (SV) bis auf eine Temperatur ($T_2$) erwärmt wird,

bei der die Polymerschicht (P) in einen Zustand übergeht, bei der sie gummiartige Eigenschaften aufweist und bei der die Formgedächtnisschicht (F) noch in der Martensitphase (M) vorliegt.

13. Verfahren nach einem der Ansprüche 10 bis 12, **dadurch gekennzeichnet, dass** die Erwärmung (WZ) durch elektrischen Strom herbeigeführt wird.


**Claims**

1. Layer composite (SV), comprising a shape memory composite, which has at least one shape memory layer (F) applied to a substrate (S), the shape memory layer (F) being in the form of a martensite phase (M) and/or an austenite phase (A) depending on the temperature (T),
   **characterized in that** the layer composite (SV) has at least one polymer layer (P) made from a polymer with thermoplastic properties,
   **in that** at a first temperature ($T_0$), at which the shape memory layer (F) is in the martensite state (M) and in which the polymer (P) is in a solid state (h), the rigidity of the polymer (P) is greater than the rigidity of the shape memory composite,
   **in that** at a second, higher temperature ($T_1$), at which the shape memory layer (F) is in the austenite state (A) and at which the polymer (P) has rubber-like properties (w), the rigidity of the polymer (P) is lower than the rigidity of the shape memory composite, and **in that** the hysteresis loop which occurs on heating (WZ) of the shape memory layer (F) into the austenite phase (A) and on cooling of the shape memory layer (F) into the martensite phase (M) respectively, with regard to the temperature (T) has a width within which lies the transition of the polymer layer (P) from the solid state (h) to the rubber-like state (w), whereat the rubber-like state (w) is **characterized in that** crosslinks of adjacent polymer chains are detached by thermal stimulation.

2. Layer composite according to Claim 1, **characterized in that** the polymer layer (P) is in thermal contact with the shape memory composite, or **in that** the polymer layer (P) is in mechanical contact with the shape memory composite and is in the same heat bath therewith.

3. Layer composite according to Claim 1 or 2, **characterized in that** the polymer layer (P) is provided on a longitudinal side or transverse side, running parallel or perpendicular to its layers (F, S), of the shape memory composite.

4. Layer composite according to one of the preceding claims, **characterized**
   **in that** a polymer layer (P) is provided on each of two opposite longitudinal sides or transverse sides, which in each case run parallel or perpendicular to its layers (F, S), of the shape memory composite.

5. Layer composite according to Claim 4, **characterized in that** the shape memory composite is surrounded by a continuous polymer layer (P) on the longitudinal sides and on the transverse sides.

6. Layer composite according to one of the preceding claims, **characterized**
   **in that** the shape memory layer (F) is an alloy containing titanium (Ti) and nickel (Ni).

7. Layer composite according to one of the preceding claims, **characterized**
   **in that** the substrate (S) is a metal, a semimetal or a ceramic, preferably comprising or consisting of molybdenum (Mo), silicon (Si), silicon dioxide ($SiO_2$) or silicon nitride ($Si_3Ni_4$).

8. Layer composite according to one of the preceding claims, **characterized**
   **in that** the substrate (S) has a coefficient of thermal expansion which differs from the coefficient of thermal expansion of the shape memory layer (F) by at least $2*10^{-6}$ 1/K.

9. Layer composite according to one of the preceding claims, **characterized**
   **in that** it has a thickness of between 1 $\mu$m and 20 mm, preferably between 20 $\mu$m and 500 $\mu$m.

10. Process for changing the shape of a layer composite according to one of the preceding claims, **characterized in that** the layer composite (SV) is heated.

11. Process according to Claim 10 for changing the shape of a layer composite from a starting shape (I) into a finishing shape (II),
    **characterized in that** the layer composite (SV) is heated to a temperature ($T_1$) at which the shape memory layer (F) changes from the martensite phase (M) completely into the austenite phase (A).

12. Process according to Claim 10 or 11 for changing the shape of a layer composite from a finishing shape (II) back into a starting shape (I),
    **characterized in that** the layer composite (SV) is heated to a temperature ($T_2$) at which the polymer layer (P) changes into a state in which it has rubber-like properties and at which the shape memory layer (F) is still in the martensite phase (M).

13. Process according to one of Claims 10 to 12, **characterized in that** the heating (WZ) is effected by electric current.

**Revendications**

1. Composite feuilleté (SV) qui comprend un composite à mémoire de forme qui présente au moins une couche (F) à mémoire de forme appliquée sur un substrat (S), la couche (F) à mémoire de forme se présentant en fonction de la température (T) sous la forme d'une phase martensitique (M) et/ou d'une phase austénitique (A),
**caractérisé en ce que**
le composite feuilleté (SV) présente au moins une couche polymère (P) en un polymère qui présente des propriétés thermoplastiques,
**en ce qu'**à une première température ($T_0$) à laquelle la couche (F) à mémoire de forme est à l'état martensitique (M) et à laquelle le polymère (P) se trouve à l'état solide (h), la rigidité du polymère (P) est plus grande que la rigidité du composite à mémoire de forme,
**en ce qu'**à une deuxième température ($T_1$) plus élevée, à laquelle la couche (F) à mémoire de forme est à l'état austénitique (A) et à laquelle le polymère (P) présente des propriétés de type caoutchouc (w), la rigidité du polymère (P) est inférieure à la rigidité du composite à mémoire de forme et **en ce que** la boucle d'hystérésis qui est parcourue lors d'un échauffement (WZ) de la couche (F) à mémoire de forme jusque dans la phase austénitique (A) et lors du refroidissement de la couche (F) à mémoire de forme jusque dans la phase martensitique (M) a une largeur de la température (T) à l'intérieur de laquelle se trouve la transition de la couche polymère (P) de l'état solide (h) jusque dans l'état caoutchouteux (w), où l'état caoutchouteux (w) est **caractérisé en ce que** contreventements des chaînes de polymères avoisinantes sont défait par l'excitation thermique.

2. Composite feuilleté selon la revendication 1, **caractérisé en ce que** la couche polymère (P) est en contact thermique avec le composite à mémoire de forme ou **en ce que** la couche polymère (P) est en contact mécanique avec le composite à mémoire de forme et se trouve dans le même bain de chauffage que ce dernier.

3. Composite feuilleté selon les revendications 1 ou 2, **caractérisé en ce que** la couche polymère (P) est prévue sur un côté longitudinal ou un côté transversal du composite à mémoire de forme qui s'étend parallèlement ou perpendiculairement à ses couches (F, S).

4. Composite feuilleté selon l'une des revendications précédentes, **caractérisé en ce qu'**une couche polymère (P) est prévue sur deux côtés longitudinaux ou transversaux opposés l'un à l'autre du composite à mémoire de forme, qui s'étendent tous deux parallèlement ou perpendiculairement à ses couches (F, S).

5. Composite feuilleté selon la revendication 4, **caractérisé en ce que** le composite à mémoire de forme est entouré par une couche polymère (P) continue sur ses côtés longitudinaux et sur ses côtés transversaux.

6. Composite feuilleté selon l'une des revendications précédentes, **caractérisé en ce que** la couche (F) à mémoire de forme est un alliage avec le titane (Ti) et le nickel (Ni).

7. Composite feuilleté selon l'une des revendications précédentes, **caractérisé en ce que** le substrat (S) est un métal, un semi-métal ou une céramique, de préférence en molybdène (Mo), en silicium (Si), en dioxyde de silicium ($SiO_2$) ou en nitrure de silicium ($Si_3Ni_4$) ou avec ses substances.

8. Composite feuilleté selon l'une des revendications précédentes, **caractérisé en ce que** le substrat (S) a un coefficient de dilatation thermique qui diffère d'au moins $2 \times 10^{-6}$ 1/K du coefficient de dilatation thermique de la couche (F) à mémoire de forme.

9. Composite feuilleté selon l'une des revendications précédentes, **caractérisé en ce que** son épaisseur est comprise entre 1 $\mu$m et 20 mm et de préférence entre 20 $\mu$m et 500 $\mu$m.

10. Procédé de modification de la forme d'un composite feuilleté selon l'une des revendications précédentes, **caractérisé en ce que** le composite feuilleté (SV) est chauffé.

11. Procédé selon la revendication 10, pour modifier la forme d'un composite feuilleté depuis une forme initiale (I) jusque dans une forme finale (II), **caractérisé en ce que** le composite feuilleté (SV) est chauffé jusqu'à une température ($T_1$) à laquelle la couche (F) à mémoire de forme passe entièrement de la phase martensitique (M) la phase austénitique (A).

12. Procédé selon les revendications 10 ou 11, pour modifier la forme d'un composite feuilleté depuis une forme finale (II) pour la ramener dans la forme initiale (I), **caractérisé en ce que** le composite feuilleté (SV) est chauffé jusqu'à une température ($T_2$) à laquelle la couche polymère (P) passe à un état dans lequel elle présente des propriétés de type caoutchouc et à laquelle la couche (F) à mémoire de forme se présente encore dans la phase martensitique (M).

13. Procédé selon l'une des revendications 10 à 12, **caractérisé en ce que** le chauffage (WZ) est provoqué par un courant électrique.

_Fig.1_

_Fig.2_

_Fig.3_

$c_A$

1,0        4            3    A

0,5    WZ

1,5             2

0,0    M

$T_0$        $T_2$        $T_1$    T

Fig. 4a

SV   F

1   M   h     I
    P   S

2   M   w

3   A   w

4   A   h     II

5   F   M   h
    P   S

Fig. 4b

Fig. 5a

Fig. 5b